# FASCICULE DE BREVET EUROPEEN

(11) **EP 2 936 284 B1**
(45) Date de publication et mention de la délivrance du brevet: **30.05.2018**
(21) Numéro de dépôt: 13829063.0
(22) Date de dépôt: 20.12.2013
(51) Int. Cl.: G06F 3/03, G06F 3/042, G06F 3/01

(54) **MODULE D'INTERFACE PERMETTANT DE DETECTER UN GESTE**
SCHNITTSTELLENMODUL ZUR ERMÖGLICHUNG DER FRÜHZEITIGEN ERKENNUNG EINER GESTE
INTERFACE MODULE MAKING IT POSSIBLE TO DETECT A GESTURE

(30) Priorité: 21.12.2012 FR 1203578
(43) Date de publication de la demande: 28.10.2015
(73) Titulaire: DAV, 94046 Creteil Cedex (FR)
(72) Inventeur: TISSOT, Jean-Marc, F-94046 Créteil cedex (FR)
(74) Mandataire: Pothmann, Karsten
(86) Numéro de dépôt international: PCT/FR2013/000367
(87) Numéro de publication internationale: WO 2014/096576

(56) Documents cités:
- EP-A2- 2 309 768
- US-A1- 2012 032 923
- US-A1- 2012 127 124
- US-A1- 2012 212 453

## Description

La présente invention concerne un module d'interface, en particulier pour l'habitacle d'un véhicule automobile et le contrôle de fonctions de ce dernier, en particulier à capteur de geste pour la détection et l'interprétation à distance d'un geste de l'utilisateur.

Pour le contrôle des fonctions d'un véhicule telles que l'assistant de navigation, l'illumination de l'habitacle, l'air conditionné ou l'autoradio, il est connu d'utiliser des modules d'interface utilisant un capteur de geste.

Afin d'augmenter le nombre de fonctions contrôlées par un module d' interface, il est connu de combiner dans un même module d' interface un capteur de geste et un capteur d'appui tel qu'une surface tactile. Le document (US 2012/0212453 A1) décrit un appareil avec différents capteurs de proximité ayant différentes sensibilités. Le document (EP2309768 A2) décrit un appareil avec plusieurs capteurs de gestes pouvant chacun détecter plusieurs distances. Cependant, ces modules d'interface sont souvent limités dans leurs possibilités en ce que les gestes effectués à distance ont généralement une unique valeur de commande indépendante de la position d'exécution, et même souvent une valeur de commande redondante avec un geste effectué sous forme d'appui glissé sur le capteur d'appui. L'invention est telle que précisée dans la revendication indépendante. Afin de répondre au moins partiellement aux besoins précédemment mentionnés, la demande a pour objet un module d'interface, comprenant :
- un capteur de geste, apte à détecter et interpréter l'exécution d'un geste par un utilisateur dans un espace de détection,
- une unité de contrôle configurée pour exécuter au moins une commande en fonction du geste détecté et interprété,
dans lequel :
- le capteur de geste est en outre configuré pour détecter si le geste est effectué en position distale ou proximale par rapport à une première distance paramétrable définissant une frontière de geste entre une zone de geste proximale et une zone de geste distale,
- il comporte en outre un capteur de proximité, configuré pour déterminer si le geste est effectué en position proximale par rapport à une seconde distance prédéfinie, définissant une frontière de proximité entre une zone de position proximale et une zone de position distale,
- l'unité de contrôle est configurée pour déplacer la frontière de geste entre la zone de position proximale et la zone de position distale selon si le capteur de proximité détecte que le geste est effectué respectivement dans la zone de position proximale ou la zone de position distale,
- et en ce que l'unité de contrôle est configurée pour adapter la au moins une commande en fonction d'états de détection du capteur de geste et du capteur de proximité.

Le module d'interface ainsi réalisé permet une division de l'espace de détection en zones nombreuses avec un équipement simple.

Ledit module d'interface peut présenter une ou plusieurs des caractéristiques suivantes, prises seules ou en combinaison.

Lorsque le capteur de proximité est en état d'absence de détection et le capteur de geste détecte l'exécution d'un geste en position distale, l'unité de contrôle est configurée pour fonctionner dans un état dégradé dans lequel une partie seulement des propriétés du geste est analysée. Ce fonctionnement dégradé permet d'utiliser moins de ressources (consommation moindre), et des capteurs à moins haute définition lointaine peuvent être utilisés

Lorsque le capteur de proximité ne détecte pas de geste exécuté dans la zone de position proximale, l'unité de contrôle est configurée pour fonctionner dans un état dégradé dans lequel une partie seulement des propriétés du geste est analysée. Ceci donne une zone de fonctionnement dégradé plus grande délimitée par une condition logique plus simple portant sur un seul capteur.

Il comporte en outre un capteur d'appui et lorsque le capteur de proximité détecte l'exécution d'un geste dans la zone de position proximale et le capteur de geste détecte l'exécution d'un geste en position proximale, l'unité de contrôle est configurée pour ignorer les gestes détectés par le capteur de geste qui sont alors considérés comme des mouvements d'approche pour exercer un appui sur le capteur d'appui. La zone morte ainsi obtenue permet de résoudre les conflits éventuels entre mouvements d'approche pour appui et geste à interpréter

Il comporte en outre un capteur d'appui et le module d'interface est configuré pour que lorsque le capteur de proximité détecte l'exécution d'un geste dans la zone de position proximale et le capteur de geste détecte l'exécution d'un geste en position proximale, l'unité de contrôle introduise un temps de latence entre la détection d'un geste par le capteur de geste et l'exécution de la commande associée et en ce que lorsqu'un appui est détecté par le capteur d'appui, les commandes associées à des gestes détectés et non encore exécutées sont annulées. Cette temporisation offre une alternative à la zone morte : tant qu'il n'y a pas appui strict sur le capteur d'appui l'utilisateur peut s'approcher indéfiniment dudit capteur d'appui

Il est configuré de telle sorte que, à partir d'un état de veille du capteur de proximité, lorsque le capteur de geste détecte l'exécution d'un geste en position proximale une procédure d'éveil du capteur de proximité est initiée. Cet éveil en temps utile permet la mise en veille du capteur de proximité lorsqu' il n'est pas utilisé et donc une économie d'énergie

L'unité de contrôle est configurée pour isoler la vitesse d'approche ou de retrait d'un élément de commande utilisé pour exécuter le geste et pour modifier la position de la frontière de geste en fonction de ladite vitesse d'approche ou de retrait. Ceci permet d'adapter l'étendue des zones à la vitesse axiale, et donc à l'amplitude axiale desdits gestes.

Il est configuré de telle sorte que, à partir d'un état de veille du capteur d'appui, lorsque le capteur de proximité détecte l'exécution d'un geste dans la zone de position proximale, une procédure d'éveil du capteur d'appui est initiée. Cet éveil en temps utile permet la mise en veille du capteur d'appui lorsqu'il n'est pas utilisé et donc une économie d'énergie.

Il comporte en outre un capteur d'appui et est configuré pour que lorsque le capteur d'appui détecte un appui, l'unité de contrôle ignore les gestes détectés tant que le capteur de proximité détecte l'exécution d'un geste dans la zone de position proximale et le capteur de geste détecte l'exécution d'un geste en position proximale. Ceci permet de résoudre les conflits entre geste de retrait après appui et geste à interpréter, l'utilisateur devant passer une frontière en s'éloignant pour que ses gestes soient à nouveau pris en compte

Le capteur de geste et le capteur de proximité comportent respectivement une pluralité d'émetteurs optiques émettant des faisceaux optiques dirigés vers l'espace de détection et une pluralité de capteurs optiques configurés pour capter la lumière réémise par un élément effectuant le geste, lesdits émetteurs optiques et capteurs optiques étant disposés sur un support commun d'un même module de capteurs. Le mode de réalisation ainsi obtenu est compact et économique.

Il comporte une pluralité de modules de capteurs, comprenant chacun au moins un capteur de geste et au moins un capteur de proximité, lesdits modules de capteurs étant orientés selon des axes différents. Ceci permet une gestion de zones en 3D à géométrie variable

Il est destiné à être intégré dans un habitacle de véhicule automobile et il comporte deux modules de capteurs, l'un des axes est orienté en direction d'un conducteur du véhicule, et le second axe est orienté en direction d'un passager du véhicule. Cet exemple de géométrie 3D est ergonomique pour habitacle de véhicule, avec un minimum de matériel impliqué.

Il comporte en outre des capteurs environnementaux et en ce que l'unité de contrôle est configurée pour ajuster la position d'au moins une des frontières de geste ou de proximité en fonction d'un signal émanant des capteurs environnementaux. Ceci permet une gestion en temps réel et intelligente des zones en fonction des situations de conduite (haute vitesse, nuit, fatigue du conducteur, etc.).

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre schématiquement un module d'interface selon un premier mode de réalisation de l'invention,
- les figures 2a, 2b et 2c montre un découpage en zones de l'espace de détection au moyen respectivement des capteurs de geste et de proximité et enfin du module d'interface de la figure 1 combinant les deux,
- la figure 3 montre un module de capteurs pour l'utilisation dans un module d'interface selon l'invention,
- la figure 4 montre schématiquement un module d'interface comportant une pluralité de modules de capteurs de la figure 3.

Sur toutes les figures, les mêmes références se rapportent aux mêmes éléments.

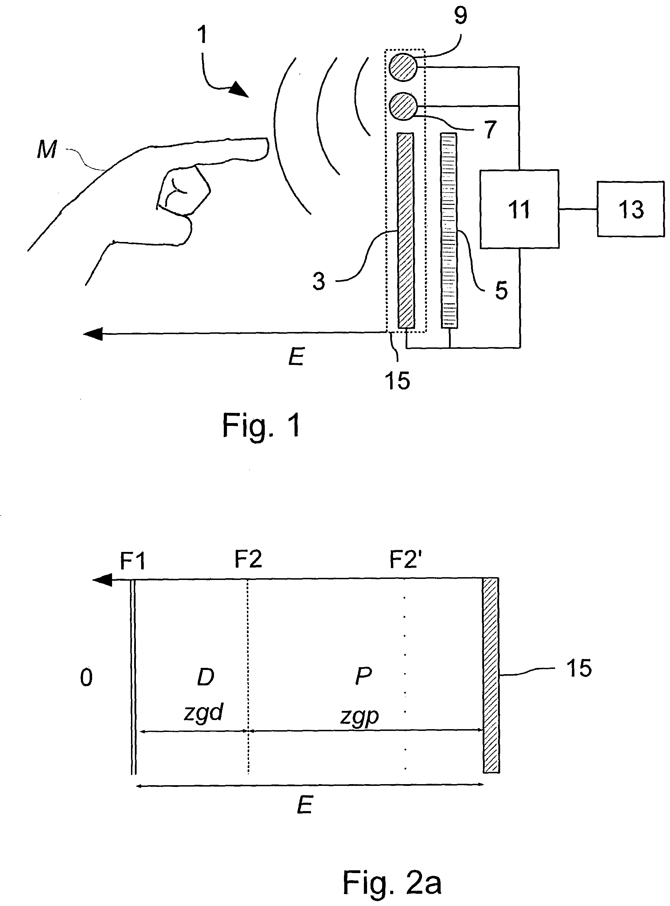

En figure 1 est montré de façon schématique un module d'interface selon un mode de réalisation particulier de l'invention.

Le module d'interface 1 comporte ici un capteur d'appui 3, ici une surface tactile transparente et placée sur un écran d'affichage 5.

Ledit capteur d'appui 3 est configuré pour détecter un appui d'un utilisateur dans le cadre de la navigation dans un menu affiché sur l'écran d'affichage 5, en particulier pour le choix et le contrôle de fonctions du véhicule, telles que l'air conditionné, un autoradio et/ou l'assistance de navigation.

La surface tactile peut par exemple être une surface tactile résistive ou capacitive, et l'écran un écran d'affichage à cristaux liquide ou diodes électroluminescentes.

En alternative, le capteur d'appui 3 peut être un capteur capacitif, auquel cas l'écran d'affichage 5 est soit situé ailleurs que derrière le capteur d'appui 3 qui est alors opaque, soit inexistant.

Dans ce qui suit, les qualités de distal et proximal sont évaluées par rapport au module d'interface 1, en particulier à la surface qu'il présente à l'utilisateur, et à l'axe dirigé par une normale à cette surface.

Si le module d'interface ne comporte pas de capteur d'appui 3, le capteur de geste 7 et/ou le capteur de proximité 9 comportent en général une surface transparente au signal optique utilisé pour la détection, et protégeant lesdits capteurs 7, 9. Les qualités de distal ou proximal sont alors évaluées par rapport à la ladite surface transparente.

Le module d'interface 1 comprend en outre un capteur de geste 7 et un capteur de proximité 9. Ces capteurs 7, 9 sont disposés de sorte à détecter un élément de commande *M,* tel qu'une partie du corps de l'utilisateur (en particulier sa main ou une partie de sa main) ou un ustensile formant repère (par exemple un stylet avec une surface réfléchissante ou un émetteur lumineux), entrant dans un espace de détection *E* situé en vis-à-vis de la surface tactile 3 et y exécutant un mouvement correspondant à un geste spécifique, tel qu'un balayage, une rotation ou un pointage ou un mouvement d'un ou plusieurs doigt.

Le capteur de geste 7 est en particulier configuré pour détecter l'exécution d'un geste par l'utilisateur dans ledit espace de détection *E* en vis-à-vis de la surface tactile 3. Le capteur peut en particulier être configuré pour capturer et analyser des champs de vecteurs correspondant au déplacement dudit élément entre deux captures d'image rapprochées dans le temps, et pour évaluer des propriétés dudit geste, par exemple sa position, la forme et la posture de l'élément l'exécutant, ou la vitesse d'exécution.

Le capteur de geste 7 peut notamment comporter une pluralité de diodes infra-rouge, émettant un signal pulsé, et des matrices de capteurs CCD (dispositifs à transfert de charge) pour l'acquisition d'images.

Ledit capteur de geste 7 est en particulier configuré pour détecter si l'exécution du geste a lieu en position distale ou proximale par rapport à une distance de geste paramétrable F2 définissant une frontière de geste F2 (voir figure 2a), qui prend ici la forme d'un plan sensiblement parallèle à la surface tactile 3.

Ledit capteur de geste 7 peut par exemple utiliser des capteurs CCD de part et d'autre du module de capteurs pour une imagerie 3D par stéréoscopie, traiter l'intensité de la lumière réfléchie ou comporter une antenne capacitive pour le positionnement en profondeur de l'élément de commande *M*.

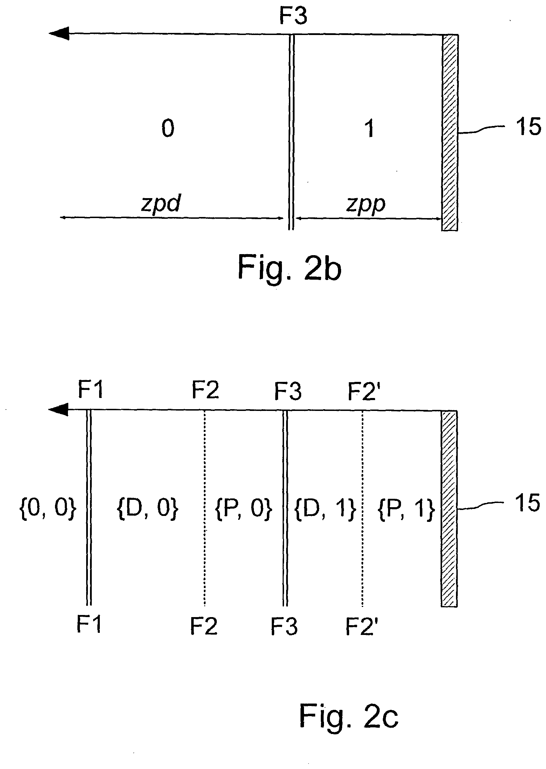

Le capteur de proximité 9 est configuré pour situer dans l'espace de détection *E* la position de l'élément de commande *M* en particulier par rapport à une distance de proximité prédéterminée définissant une frontière de proximité F3 (voir figure 2b).

Le capteur de proximité peut par exemple comparer l'intensité de la lumière de diodes réfléchie par l'élément de commande *M* à des valeurs seuil, ou bien détecter l'intersection d'un ou plusieurs faisceaux infra-rouge par ledit élément de commande *M.*

En particulier le capteur de proximité 9 ne requiert qu'un traitement d'images instantanées et de résolutions potentiellement plus grossières, notamment par rapport au capteur de geste 7 qui requiert le traitement d'images successives de plus haute résolution pour isoler les mouvements à interpréter comme gestes.

Le capteur de proximité 9 requiert donc des capacités de traitement moindres que le capteur de geste 7, et est aussi potentiellement plus rapide à l'exécution.

Les capteurs 7, 9, 3 ainsi que l'écran 5 sont reliés à une unité de contrôle 11 qui en contrôle le fonctionnement. Celle-ci peut notamment comprendre tout ou partie des moyens de traitement d'image utilisés pour détecter, analyser et positionner le geste et/ou l'élément de commande *M*.

En particulier, l'unité de contrôle 11 est configurée pour exécuter des commandes spécifiques en fonction des propriétés du geste analysé. Dans l'exemple en figure 1, l'unité de contrôle est reliée à des capteurs environnementaux 13, qui mesurent ou détectent des paramètres du véhicule, du conducteur et/ou de l'environnement extérieur, afin d'adapter les commandes aux paramètres mesurés ou détectés.

Les capteurs environnementaux 13 peuvent par exemple comporter un capteur de la vitesse du véhicule, un capteur de luminosité intérieure et/ou extérieure, un capteur de la direction du regard de l'utilisateur.

Enfin l'unité de contrôle 11 peut prendre en compte les tâches en cours dans le module d'interface 1, et la valeur des vecteurs de déplacement de l'élément mesurés par le capteur de geste 7, pour ajuster la largeur des zones aux temps d'éveil et d'activation des éléments précédemment mentionnés et à la vitesse de l'élément détecté.

L'unité de contrôle 11 peut aussi prendre en compte des événements entrants tels qu'un appel téléphonique, un signal radio (flash informatif ou rapports d'état des routes) ou autres.

En figure 1, les capteurs de geste 7 et de proximité 9 sont représentés groupés au sein d'un module de capteurs 15.

La figure 2a illustre le fonctionnement du capteur de geste 7.

En figure 2a est représenté le module de capteurs 15, à partir duquel s'étend l'espace de détection *E* jusqu'à une certaine distance définissant une frontière distale F1, ici plane, et au delà de laquelle les gestes ne sont plus détectés ou interprétés.

Cette distance correspond soit à la limite physique de détection imposée par le capteur de geste 7, par exemple du fait de la sensibilité des capteurs optiques et de la puissance des diodes infra-rouge, soit à une limitation artificielle au moyen de seuils de détection paramétrés via l'unité de contrôle 11 afin de limiter la prise en compte de signaux parasites ou de commandes *M* parasites.

Le capteur de geste 7 est en outre configuré pour détecter si le geste est effectué en position distale ou proximale par rapport à une distance paramétrable, en particulier par l'unité de contrôle 11, définissant une frontière de geste F2.

Cette frontière de geste F2 sépare l'espace de détection *E* en une zone de geste proximale *zgp,* située entre le capteur d'appui 3 et ladite frontière de geste F2, et une zone de geste distale *zgd,* située entre ladite frontière F2 et la frontière distale F1.

Indépendamment de l'interprétation des propriétés du geste détecté (forme, direction, vitesse d'exécution), le capteur de geste 7 est configuré de sorte à se trouver dans un des trois états suivant :
- 0, correspondant à l'absence de geste exécuté dans l'espace de détection *E*,
- *D*, correspondant à la détection de l'exécution d'un geste dans la zone de geste distale *zgd,*
- *P*, correspondant à la détection de l'exécution d'un geste dans la zone de geste proximale zgp.

La frontière de geste F2 peut être déplacée, en particulier par l'unité de contrôle 11 par exemple en changeant la paramétrisation de valeurs seuils (luminosité réfléchie, taille en pixels détectée de l'élément de commande *M*) du capteur de geste 7, au moins vers une deuxième position définissant une seconde frontière de geste F2'.

La figure 2b illustre le fonctionnement du capteur de proximité 9. En figure 2b est représenté le module de capteurs 15, à partir duquel s'étend l'espace de détection *E*, dont seule une partie proximale est ici visible (la frontière distale F1 est ici hors champs).

Le capteur de proximité 9 est configuré pour détecter si le geste est effectué en position proximale par rapport à une certaine distance prédéterminée définissant une frontière de proximité F3, située dans l'espace de détection *E.*

Cette frontière de proximité F3 définit une zone de position proximale *zpp* située entre le module de capteurs 15 et la frontière de proximité F3, et une zone de position distale *zpd* située au-delà.

Le capteur de proximité 9 est ainsi configuré pour se trouver dans deux états de détection suivants :
- 0, pour l'absence de détection de présence ou de geste exécuté dans la zone de position proximale *zpp,*
- 1, pour la détection de présence ou d'un geste exécuté dans la zone de position proximale *zpp,*

La figure 2c illustre le fonctionnement conjoint des capteurs de geste 7 et de proximité dans un module d'interface 1 selon un premier mode de réalisation de l'invention.

L'unité de contrôle 11 est ici configurée pour déplacer la frontière de geste F2 entre la zone de position distale *zpd* et la zone de position proximale *zpp*, de sorte à définir une seconde frontière de geste F2', lorsque le capteur de proximité détecte un geste exécuté dans la zone de position proximale *zpp.*

Lors du retrait de la main ou de l'élément à détecter, le franchissement en sens inverse de la frontière F3, caractérisé par le passage de 1 à 0 du capteur de proximité 9, entraîne le passage de F2' à F2 de la frontière paramétrable du capteur de geste 7.

Cette paramétrisation de la frontière F2/F2' du capteur de geste 7 permet une subdivision de l'espace de détection en quatre zones actives (plus une zone hors champs inactive), qui peuvent être utilisées différemment dans l'analyse des gestes.

Ces quatre zones correspondent aux combinaisons d'états de détection que peuvent prendre les capteurs de geste 7 et de proximité 9 :
- la zone hors champs correspond au doublet {0, 0},
- la zone la plus distale correspond au doublet {0, *D*},
- la zone suivante en s'approchant du module de capteurs 15 est la zone correspondant au doublet {0, *P*},
- ensuite vient la zone correspondant au doublet {1, *D*},
- enfin la zone la plus proche du module de capteurs 15 est la zone correspondant au doublet {1, *P*}.

En particulier, l'unité de contrôle 11 est configurée pour adapter les commandes exécutées en fonction des états de détection des capteurs de geste 7 et de proximité 9.

Des modes de réalisation plus complexes, avec un plus grand nombre de zones peuvent être obtenus en ajoutant notamment des capteurs de proximité 9 supplémentaires, avec chacun une frontière F3 située à une distance différente du module de capteurs 15. Le franchissement d'une des frontières F3 de zone proximale d'un capteur entraînant alors le passage de la frontière paramétrable F2/F2' entre la frontière F3 de zone de proximité traversée et la suivante dans le sens de progression de l'élément à détecter.

En n'utilisant que des capteurs 7, 9 relativement simples, donc fiables et potentiellement moins coûteux, l'invention permet de multiplier les zones de détection de geste, et donc les possibilités de contrôle de fonctions variées. L'unité de contrôle 9 est alors avantageusement configurée pour adapter les commandes en fonction d'états de détection {0, *D*}, {0, *P*}, {1, *D*}, {1, *P*} du capteur de geste 7 et du capteur de proximité 9, en plus des propriétés du geste détecté.

Par exemple un balayage latéral ou vertical peut déclencher un défilement à l'écran 5, avec une vitesse plus importante en rapport avec la distance au module de capteurs 15 de la zone dans laquelle il est effectué. Dans le cas précédemment expliqué, par exemple, un balayage dans la zone {0, *D*} déclenche un défilement à vitesse importante, tandis que le même balayage dans la zone {1, *D*} entraînera un défilement à vitesse moindre.

En particulier, lorsque le geste est détecté dans la zone {0, *D*} la plus distale, le module d'interface 1 peut être configuré pour fonctionner dans un état dégradé, dans lequel une partie seulement des propriétés du geste sont analysées.

Par exemple, lorsque le module d'interface 1 fonctionne en mode dégradé, le capteur de geste 7 peut fonctionner à moindre puissance. S'il utilise des émetteurs optiques illuminant l'espace de détection et des détecteurs optiques pour capter la lumière réémise par l'élément exécutant le geste, une partie des émetteurs et/ou des capteurs peut être mise hors tension jusqu' à ce que le geste soit détecté dans la zone {0, *P*} suivante en s'approchant du module d'interface 1.

En outre, des capteurs de geste 7 ayant une moindre résolution au moins dans le domaine lointain sont alors utilisables, puisqu' une interprétation grossière du geste, par exemple portant uniquement sur sa présence absolue ou sa direction globale, est utilisée dans ladite zone éloignée {0, *D*}.

En alternative, la zone de fonctionnement à l'état dégradé peut être étendue à toute la zone de position proximale en faisant porter la condition logique de façon simplifiée sur le seul capteur de proximité 9 : lorsque le capteur de proximité 9 ne détecte pas de présence ou de geste exécuté dans la zone de position proximale *zpp,* le module de commande 1 est configurée pour fonctionner dans un état dégradé dans lequel une partie seulement des propriétés du geste est analysée.

Le passage du mode de fonctionnement dégradé du module d'interface 1 au mode de fonctionnement normal peut s'accompagner de procédures telles que : une mise en route, l'augmentation ou le changement d'un éclairage de l'habitacle ou du module d'interface 1, la mise en route de l'écran 5, l'émission d'un son et/ou d'une vidéo sur l'écran 5, l'affichage d'un menu, etc.

En particulier, l'étendue des zones est avantageusement choisie selon l'utilisation de l'ordre de quelques centimètres à quelques dizaines de centimètres dans le cas d'une utilisation dans un habitacle de voiture, jusqu'à quelques mètres pour le cas d'une utilisation par exemple en vitrine de magasin, voire de quelques centaines de microns ou millimètres pour par exemple distinguer la présence d'un doigt et son approche pour délivrer des sensations haptiques sur une surface tactile.

En outre ou en alternative, l'unité de contrôle 11 peut être configurée pour isoler au moyen du capteur de geste 7 la vitesse d'approche de l'élément de commande *M* et pour positionner au moins la frontière de geste F2/F2' en fonction de ladite vitesse d'approche isolée

Ceci permet par exemple l'exécution de la procédure d'éveil avant le franchissement par l'élément de commande *M* de la frontière de proximité F3 gérée par le capteur de proximité, ou bien d'adapter de manière générale la tailles des zones à une amplitude attendue des gestes, généralement croissante avec la vitesse.

Dès lors, dans la zone suivante {0, *P*} en direction de la surface tactile 3, l'interprétation fine des gestes par le capteur de geste 7 est possible. Le module d'interface 1 permet alors le contrôle des fonctions du véhicule selon les gestes spécifiques détectés dans ladite zone {0, *P*} en fonction de toutes les propriétés dudit geste : direction, mais aussi amplitude, position de la main (ou autre élément de commande *M* utilisé), présence et sens de rotation et motif dessiné entre autres.

En particulier, le module d'interface 1 peut être configuré pour que la détection de l'élément de commande *M* dans ladite zone {0, *P*} déclenche l'activation du capteur de proximité 9, initialement mis en veille ou hors tension.

L'unité de contrôle 11 peut en outre placer au moins une des frontières paramétrables F2, F2' relativement à la position détectée d'un geste prédéterminé.

Lors d'un mouvement d'approche de la surface tactile 3, le capteur de proximité 9 est ainsi réveillé à temps pour détecter le passage par la frontière F3, ce qui déclenche le basculement de la frontière F2 en F2', sans qu'un temps d'attente au franchissement de F3 ait été nécessaire.

Le franchissement de la frontière F2' par l'élément de commande *M* peut entraîner un arrêt de l'interprétation des gestes par le capteur de geste 7 si le module d' interface 1 est configuré de sorte que la zone {1, *P*} soit une zone dite morte, où l'on considère que l'utilisateur n'entre que pour appuyer sur la surface tactile 3, et dans laquelle les gestes sont ignorés.

Pour ce faire, lorsque le capteur de proximité 9 est en état de détection dans la zone de position proximale *zpp* et le capteur de geste 7 détecte l'exécution d'un geste en position proximale {1, *P*}, l'unité de contrôle 11 ignore les gestes détectés par le capteur de geste 9.

En alternative, le module d'interface peut être configuré pour que lorsque le capteur de proximité 9 détecte l'exécution d'un geste ou d'une présence dans la zone de position proximale *zpp* et le capteur de geste 7 détecte l'exécution d'un geste en position proximale {1, *P*}, l'unité de contrôle 11 introduise un temps de latence entre la détection d'un geste par le capteur de geste 7 et l'exécution de la commande associée. Lorsqu'un appui est détecté par le capteur d'appui 3, les commandes associées à des gestes détectés et non encore exécutées sont annulées ou ne sont pas prises en compte.

Le temps de latence introduit doit alors être choisi comme un compromis entre un temps suffisamment long pour éviter la prise en compte de gestes non désirés, et la perception qu'a l'utilisateur dudit temps de latence, qui peut en particulier être vu comme une gêne.

Un temps typiquement de l'ordre de dix à cent-cinquante millisecondes, par exemple soixante-dix millisecondes, est indiqué.

Pour le cas des gestes de retrait, l'utilisation de la frontière de geste F2' la plus proximale permet une résolution en configurant le module d'interface 1 de sorte que lorsque le capteur d'appui 3 détecte un appui, l'unité de contrôle 11 est configurée pour ignorer les gestes détectés tant que le capteur de proximité 9 détecte l'exécution d'un geste ou d'une présence dans la zone de position proximale *zpp* et le capteur de geste 7 détecte l'exécution d'un geste en position proximale (zone {1, *P*}). L'utilisateur doit alors passer la seconde frontière de geste F2' en s'éloignant pour que ses gestes soient à nouveau pris en compte.

Dans tous les cas, la détection du franchissement de ladite frontière F2' la plus proche du capteur d'appui 3, en direction dudit capteur d'appui 3, s'accompagne avantageusement d'une préparation du capteur d'appui 3 à recevoir un appui, il peut notamment être à ce moment sortie d'un état de veille par l'exécution d'une procédure d'éveil.

À nouveau, la largeur de la zone {1, *P*} peut être choisie en fonction du temps nécessaire à l'activation du capteur d'appui 3 et de la vitesse moyenne attendue ou de la vitesse mesurée dans la zone {1, *P*}, de manière tout à fait analogue à la zone {0, *P*} pour le capteur de proximité 9.

L'unité de contrôle 11 peut aussi notamment prendre en compte les signaux des capteurs environnementaux 13 pour adapter les valeurs de commande des gestes détectés et/ou les positions des frontières F1, F2, F2', F3.

Par exemple, dans le cas d'un module d'interface pour habitacle de véhicule automobile, si une haute vitesse du véhicule (plus de cinquante ou soixante-dix kilomètres par heure) est détectée, la zone de fonctionnement à l'état dégradé du module d'interface peut être étendue, soit en incluant la zone {0, *P*} soit en déplaçant la frontière de geste F2 en direction proximale, et la solution de la zone morte en {1, *P*} (sans temps de latence) sera préférée.

De même, si le véhicule est détecté à l'arrêt, ou s'il est détecté que le passager est en train d'exécuter les gestes, la zone de fonctionnement dégradé peut être réduite, et un fonctionnement dans la zone {1, *P*} avec un temps de latence sera préféré.

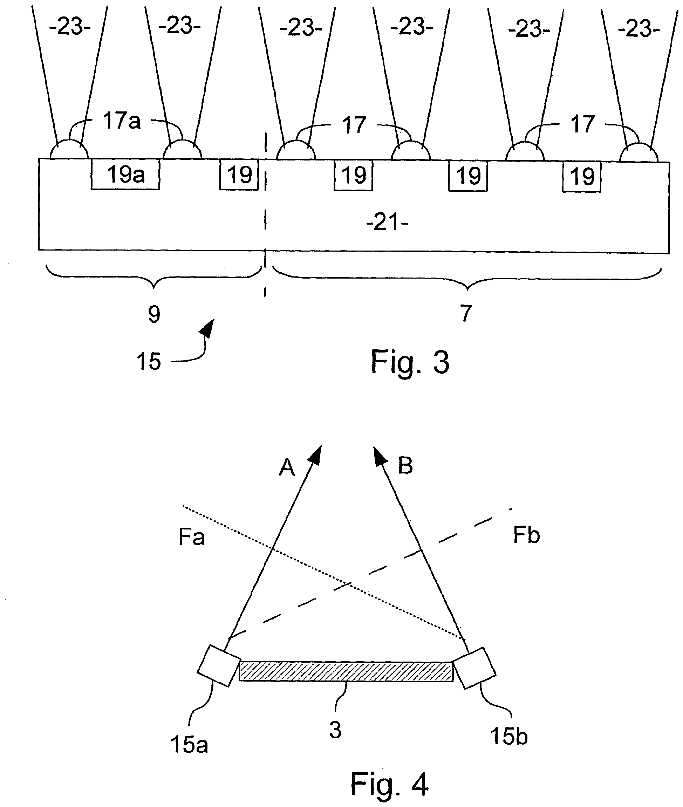

La figure 3 montre un mode de réalisation d'un module de capteur 15, comprenant une pluralité d'émetteurs 17 infra-rouge, ici des diodes électroluminescentes infra-rouge, et une pluralité de capteurs optiques 19, par exemple des matrices de capteurs CCD (à transfert de charge). Les émetteurs 17 et les capteurs optiques 19 sont en particulier portés par un même support 21.

Les diodes 17 sont disposées les unes à côté des autres, pointant leurs cônes d'illumination 23 dans la direction de l'espace de détection *E*. Les capteurs optiques 19 sont disposés chacun entre deux diodes 17 consécutives, et configurés pour recevoir la lumière venant de l'élément à détecter qui réémet une partie de la lumière des diodes 17.

Le support 21 des éléments précédemment mentionnés est par exemple une carte à circuit imprimé, avec un corps en résine ou matière plastique ou composite, pouvant porter en outre au moins une partie de l'électronique de traitement d'image (processeurs, unités de mémoire, unités de comparaison d'images successives, etc.), ainsi que de l'unité de contrôle 11.

En particulier, un cache (non représenté), transparent au moins à la gamme spectrale des diodes, peut être placé devant les diodes 17 afin de protéger et d'intégrer dans l'habitacle lesdites diodes 17 ainsi que les capteurs optiques 19.

Dans le mode de réalisation schématiquement représenté, une portion, ici la portion 17a la plus à gauche sur la figure 3, des diodes 17 et une portion 19a, la plus à gauche en figure 3, des capteurs optiques 19 est dédiée à la détection de proximité, et forme donc le capteur de proximité 9. Les autres diodes 17 et capteurs 19 sont dédiés à la détection de gestes, et forment donc le capteur de geste 7.

En alternative, les émetteurs optiques 17 et capteurs optiques 19 peuvent être utilisés tour-à-tour pour la détection de proximité et la détection de geste par alternances dans le temps d'au moins une partie d'entre eux.

Ainsi, les deux capteurs 7, 9 respectivement de geste et de proximité sont réunis sur un même support physique 21, qui est aisément assemblé et intégré dans l'habitacle du véhicule, et une seule fenêtre ou un seul cache transparent par module de capteur 15 est requis.

La figure 4 montre un mode de réalisation de module d'interface 1 comportant une pluralité de modules de capteurs 15, ici deux.

Ces modules de capteurs 15 sont placés de part et d'autre de la surface tactile 3, et orientés selon deux axes différents A et B, les frontières de zone correspondant, dont seules deux, Fa et Fb, sont représentées schématiquement, et sont ici des plans perpendiculaires aux axes A et B.

L'utilisation de plusieurs modules de capteurs 15 orientés dans des directions spécifiques permet un découpage en polygones de l'espace de détection *E*.

En particulier, le mode de réalisation représenté en figure 4 est avantageusement placé dans un habitacle véhicule automobile, et les axes A et B sont alors orientés pour pointer respectivement vers le conducteur et le passager du véhicule.

L'invention permet donc d'une part de créer une subdivision de l'espace de détection en zones au moyen de capteurs simples et donc peu coûteux, en particulier en considérant par exemple le coût que représente un capteur optique capable de situer un élément par rapport à trois frontières.

L'utilisation desdites zones permet aussi de résoudre les conflits entre gestes d'approche pour appui et gestes à interpréter tout en s'affranchissant au moins dans la majorité de l'espace de détection des temps de latence à l'interprétation des geste.

Enfin, les différentes zones peuvent être utilisées pour l'éveil successif des éléments impliqués lors d'une approche de l'élément sans attente de l'utilisateur, ce qui permet des économies d'énergies potentielles sans nuire au ressenti.

## Revendications

1. Module d'interface, comprenant :
- un capteur de geste (7), apte à détecter et interpréter l'exécution d'un geste par un utilisateur dans un espace de détection (*E*),
- une unité de contrôle (11) configurée pour exécuter au moins une commande en fonction du geste détecté et interprété,
dans lequel :
- le capteur de geste (7) est en outre configuré pour détecter si le geste est effectué en position distale ou proximale par rapport à une première distance paramétrable définissant une frontière de geste (F2, F2') entre une zone de geste proximale (*zgp*) et une zone de geste distale (*zgd*),
- il comporte en outre un capteur de proximité (9), configuré pour déterminer si le geste est effectué en position proximale par rapport à une seconde distance prédéfinie, définissant une frontière de proximité (F3) entre une zone de position proximale (*zpp*) et une zone de position distale (*zpd*),
- l'unité de contrôle (11) est configurée pour déplacer la frontière de geste (F2, F2') entre la zone de position proximale (*zpp*) et la zone de position distale (*zpd*) selon si le capteur de proximité (9) détecte que le geste est effectué respectivement dans la zone de position proximale (*zpp*) ou la zone de position distale (*zpd*),
- et en ce que l'unité de contrôle (9) est configurée pour adapter la au moins une commande en fonction d'états de détection ({0, *D*}, {0, *P*}, {1, *D*}, {1, *P*}) définis à partir des zones du capteur de geste (7) et du capteur de proximité (9)
- et en ce qu' il comporte en outre un capteur d'appui (3), **caractérisé en ce que** le module d'interface est configuré pour que lorsque le capteur de proximité (9) détecte l'exécution d'un geste dans la zone de position proximale (*zpp*) et le capteur de geste (7) détecte l'exécution d'un geste en position proximale ({1, *P*}), l'unité de contrôle (11) introduise un temps de latence entre la détection d'un geste par le capteur de geste (7) et l'exécution de la commande associée et **en ce que** lorsqu'un appui est détecté par le capteur d'appui (3), les commandes associées à des gestes détectés et non encore exécutées sont annulées ou non prises en compte.

2. Module d'interface selon la revendication 1, **caractérisé en ce que** lorsque le capteur de proximité (9) est en état d'absence de détection et le capteur de geste (7) détecte l'exécution d'un geste en position distale ({0, *D*}), l'unité de contrôle (11) est en outre configurée pour fonctionner dans un état dégradé dans lequel une partie seulement des propriétés du geste est analysée.

3. Module d'interface selon la revendication 1, **caractérisé en ce que** lorsque le capteur de proximité (9) ne détecte pas de geste exécuté dans la zone de position proximale (*zpp*), l'unité de contrôle (11) est en outre configurée pour fonctionner dans un état dégradé dans lequel une partie seulement des propriétés du geste est analysée.

4. Module d'interface selon l'une des revendications précédentes, comportant en outre un capteur d'appui (3), **caractérisé en ce que** lorsque le capteur de proximité (9) détecte l'exécution d'un geste dans la zone de position proximale (*zpp*) et le capteur de geste (7) détecte l'exécution d'un geste en position proximale ({1, *P*}), l'unité de contrôle (11) est configurée pour ignorer les gestes détectés par le capteur de geste (9) qui sont alors considérés comme des mouvements d'approche pour exercer un appui sur le capteur d'appui (3).

5. Module d'interface selon l'une au moins des revendications précédentes, **caractérisé en ce qu'**il est configuré de telle sorte que, à partir d'un état de veille du capteur de proximité (9), lorsque le capteur de geste (7) détecte l'exécution d'un geste en position proximale ({0, *P*}), une procédure d'éveil du capteur de proximité (9) est initiée.

6. Module d'interface selon l'une des revendications précédentes, **caractérisé en ce que** l' unité de contrôle (11) est en outre configurée pour isoler la vitesse d'approche ou de retrait d'un élément de commande (*M*) utilisé pour exécuter le geste et pour modifier la position de la frontière de geste (F2) en fonction de ladite vitesse d'approche ou de retrait.

7. Module d'interface selon l'une au moins des revendications 1 à 3, comportant en outre un capteur d'appui (3), **caractérisé en ce qu'**il est configuré de telle sorte que, à partir d'un état de veille du capteur d'appui (3), lorsque le capteur de proximité (9) détecte l'exécution d'un geste dans la zone de position proximale (*zpp*), une procédure d'éveil du capteur d'appui (3) est initiée.

8. Module d'interface selon l'une au moins des revendications 1 à 3, comportant en outre un détecteur d'appui (3) **caractérisé en ce que** le module d'interface (1) est configuré pour que lorsque le détecteur d'appui (3) détecte un appui, l'unité de contrôle (11) est configurée pour ignorer les gestes détectés tant que le capteur de proximité (9) détecte l'exécution d'un geste dans la zone de position proximale (*zpp*) et le capteur de geste (7) détecte l'exécution d'un geste en position proximale ({1, *P*}).

9. Module d'interface selon l'une au moins des revendications précédentes, **caractérisées en ce que** le capteur de geste (7) et le capteur de proximité (9) comportent respectivement une pluralité d'émetteurs optiques (17, 17a) émettant des faisceaux optiques (23) dirigés vers l'espace de détection (*E*) et une pluralité de capteurs optiques (19, 19a) configurés pour capter la lumière réémise par un élément effectuant le geste, lesdits émetteurs optiques (17, 17a) et capteurs optiques (19, 19a) étant disposés sur un support (21) commun d'un même module de capteurs (15).

10. Module d'interface selon l'une des revendications précédentes, **caractérisé en ce qu'**il comporte en outre une pluralité de modules de capteurs (15), comprenant chacun au moins un capteur de geste (7) et au moins un capteur de proximité (9), lesdits modules de capteurs (15) étant orientés selon des axes différents (A, B).

11. Module d'interface selon la revendication 10, destiné à être intégré dans un habitacle de véhicule automobile **caractérisé en ce qu'**il comporte deux modules de capteurs (15) et qu'un des axes (A) est orienté en direction d'un conducteur du véhicule, et le second axe (B) est orienté en direction d'un passager du véhicule.

12. Module d'interface selon l'une des revendications précédentes, **caractérisé en ce qu'**il comporte en outre des capteurs environnementaux (13) et **en ce que** l'unité de contrôle (11) est configurée pour ajuster la position d'au moins une des frontières de geste ou de proximité (F1, F2, F2', F3) en fonction d'un signal émanant des capteurs environnementaux (13).

## Patentansprüche

1. Schnittstellenmodul, welches umfasst:
- einen Gestensensor (7), der in der Lage ist, die Ausführung einer Geste durch einen Benutzer in einem Erkennungsraum (*E*) zu erkennen und zu interpretieren,
- eine Steuereinheit (11), die dafür ausgelegt ist, in Abhängigkeit von der erkannten und interpretierten Geste wenigstens einen Befehl auszuführen,
wobei:
- der Gestensensor (7) außerdem dafür ausgelegt ist zu erkennen, ob die Geste in einer distalen oder proximalen Position in Bezug auf einen parametrierbaren ersten Abstand ausgeführt wird, der eine Gestengrenze (F2, F2') zwischen einem proximalen Gestenbereich (*zgp*) und einem distalen Gestenbereich (*zgd*) definiert,
- es außerdem einen Näherungssensor (9) aufweist, der dafür ausgelegt ist zu bestimmen, ob die Geste in einer proximalen Position in Bezug auf einen vordefinierten zweiten Abstand ausgeführt wird, der eine Proximitätsgrenze (F3) zwischen einem proximalen Positionsbereich (*zpp*) und einem distalen Positionsbereich (*zpd*) definiert,
- die Steuereinheit (11) dafür ausgelegt ist, die Gestengrenze (F2, F2') zwischen dem proximalen Positionsbereich (*zpp*) und dem distalen Positionsbereich (*zpd*) zu verschieben, je nachdem, ob der Näherungssensor (9) erkennt, dass die Geste im proximalen Positionsbereich (*zpp*) oder im distalen Positionsbereich (*zpd*) ausgeführt wird,
- und dadurch, dass die Steuereinheit (9) dafür ausgelegt ist, den wenigstens einen Befehl in Abhängigkeit von Erkennungszuständen ({0, *D*}, {0, *P},* {1, *D},* {1, *P*}) anzupassen, die ausgehend von den Bereichen des Gestensensors (7) und des Näherungssensors (9) definiert sind,
- und dadurch, dass es außerdem einen Andrucksensor (3) aufweist, **dadurch gekennzeichnet, dass** das Schnittstellenmodul dafür ausgelegt ist, dass, wenn der Näherungssensor (9) die Ausführung einer Geste im proximalen Positionsbereich (*zpp*) erkennt und der Gestensensor (7) die Ausführung einer Geste in einer proximalen Position ({1, *P*}) erkennt, die Steuereinheit (11) eine Latenzzeit zwischen der Erkennung einer Geste durch den Gestensensor (7) und der Ausführung des zugeordneten Befehls einführt, und dadurch, dass, wenn durch den Andrucksensor (3) ein Druck erkannt wird, die den erkannten Gesten zugeordneten und noch nicht ausgeführten Befehle annulliert oder nicht berücksichtigt werden.

2. Schnittstellenmodul nach Anspruch 1, **dadurch gekennzeichnet, dass**, wenn sich der Näherungssensor (9) in einem Zustand des Nichtvorhandenseins einer Erkennung befindet und der Gestensensor (7) die Ausführung einer Geste in einer distalen Position ({0, *D*}) erkennt, die Steuereinheit (11) außerdem dafür ausgelegt ist, in einem funktionsgeminderten Zustand zu arbeiten, in welchem nur ein Teil der Eigenschaften der Geste analysiert wird.

3. Schnittstellenmodul nach Anspruch 1, **dadurch gekennzeichnet, dass**, wenn der Näherungssensor (9) keine Geste erkennt, die im proximalen Positionsbereich (*zpp*) ausgeführt wird, die Steuereinheit (11) außerdem dafür ausgelegt ist, in einem funktionsgeminderten Zustand zu arbeiten, in welchem nur ein Teil der Eigenschaften der Geste analysiert wird.

4. Schnittstellenmodul nach einem der vorhergehenden Ansprüche, welches außerdem einen Andrucksensor (3) aufweist, **dadurch gekennzeichnet, dass**, wenn der Näherungssensor (9) die Ausführung einer Geste im proximalen Positionsbereich (*zpp*) erkennt und der Gestensensor (7) die Ausführung einer Geste in einer proximalen Position ({1, *P*}) erkennt, die Steuereinheit (11) dafür ausgelegt ist, die von dem Gestensensor (9) erkannten Gesten zu ignorieren, welche dann als Annäherungsbewegungen zum Ausüben eines Drucks auf den Andrucksensor (3) betrachtet werden.

5. Schnittstellenmodul nach einem der vorhergehenden Ansprüche, **dadurch gekennzeichnet, dass** es derart ausgelegt ist, dass, ausgehend von einem Bereitschaftszustand des Näherungssensors (9), wenn der Gestensensor (7) die Ausführung einer Geste in einer proximalen Position ({0, *P*}) erkennt, eine Aufweckprozedur des Näherungssensors (9) eingeleitet wird.

6. Schnittstellenmodul nach einem der vorhergehenden Ansprüche, **dadurch gekennzeichnet, dass** die Steuereinheit (11) außerdem dafür ausgelegt ist, die Annäherungs- oder Rückzugsgeschwindigkeit eines Steuerelements (*M*) zu isolieren, das zum Ausführen der Geste verwendet wird, und die Position der Gestengrenze (F2) in Abhängigkeit von dieser Annäherungs- oder Rückzugsgeschwindigkeit zu ändern.

7. Schnittstellenmodul nach wenigstens einem der Ansprüche 1 bis 3, welches außerdem einen Andrucksensor (3) aufweist, **dadurch gekennzeichnet, dass** es derart ausgelegt ist, dass, ausgehend von einem Bereitschaftszustand des Andrucksensors (3), wenn der Näherungssensor (9) die Ausführung einer Geste im proximalen Positionsbereich (*zpp*) erkennt, eine Aufweckprozedur des Andrucksensors (3) eingeleitet wird.

8. Schnittstellenmodul nach wenigstens einem der Ansprüche 1 bis 3, welches außerdem einen Andruckdetektor (3) aufweist, **dadurch gekennzeichnet, dass** das Schnittstellenmodul (1) dafür ausgelegt ist, dass, wenn der Andruckdetektor (3) ein Drücken erkennt, die Steuereinheit (11) dafür ausgelegt ist, die erkannten Gesten zu ignorieren, solange der Näherungssensor (9) die Ausführung einer Geste in dem proximalen Positionsbereich (*zpp*) erkennt und der Gestensensor (7) die Ausführung einer Geste in einer proximalen Position ({1, *P*}) erkennt.

9. Schnittstellenmodul nach wenigstens einem der vorhergehenden Ansprüche, **dadurch gekennzeichnet, dass** der Gestensensor (7) und der Näherungssensor (9) jeweils mehrere optische Sender (17, 17a) aufweisen, die zum Erkennungsraum (E) gerichtete Lichtbündel (23) aussenden, und mehrere optische Sensoren (19, 19a), die dafür ausgelegt sind, das von einem die Geste ausführenden Element zurückgesendete Licht aufzufangen, wobei die optischen Sender (17, 17a) und optischen Sensoren (19, 19a) auf einem gemeinsamen Träger (21) ein und desselben Sensormoduls (15) angeordnet sind.

10. Schnittstellenmodul nach einem der vorhergehenden Ansprüche, **dadurch gekennzeichnet, dass** es außerdem mehrere Sensormodule (15) aufweist, die jeweils wenigstens einen Gestensensor (7) und wenigstens einen Näherungssensor (9) umfassen, wobei die Sensormodule (15) entlang verschiedener Achsen (A, B) ausgerichtet sind.

11. Schnittstellenmodul nach Anspruch 10, welches dazu bestimmt ist, in einen Fahrgastraum eines Kraftfahrzeugs integriert zu werden, **dadurch gekennzeichnet, dass** es zwei Sensormodule (15) aufweist und dass eine der Achsen (A) in Richtung eines Fahrers des Fahrzeugs ausgerichtet ist und die zweite Achse (B) in Richtung eines Beifahrers des Fahrzeugs ausgerichtet ist.

12. Schnittstellenmodul nach einem der vorhergehenden Ansprüche, **dadurch gekennzeichnet, dass** es außerdem Umgebungssensoren (13) aufweist, und dadurch, dass die Steuereinheit (11) dafür ausgelegt ist, die Position der Gestengrenze und/oder der Proximitätsgrenze (F1, F2, F2', F3) in Abhängigkeit von einem Signal zu verstellen, das von den Umgebungssensoren (13) stammt.

## Claims

1. Interface module, comprising:
- a gesture sensor (7), capable of detecting and interpreting the execution of a gesture by a user in a detection space (*E*),
- a control unit (11) configured to execute at least one command on the basis of the detected and interpreted gesture,
wherein:
- the gesture sensor (7) is also configured to detect whether the gesture is made in a distal or proximal position relative to a first configurable distance defining a gesture boundary (F2, F2') between a proximal gesture zone (*zgp*) and a distal gesture zone (*zgd*),
- it further comprises a proximity sensor (9) configured to determine whether the gesture is made in a proximal position relative to a second predefined distance defining a proximity boundary (F3) between a proximal position zone (*zpp*) and a distal position zone (*zpd*),
- the control unit (11) is configured to move the gesture boundary (F2, F2') between the proximal position zone (*zpp*) and the distal position zone (*zpd*) according to whether the proximity sensor (9) detects that the gesture is made, respectively, in the proximal position zone (*zpp*) or the distal position zone (*zpd*),
- and in that the control unit (9) is configured to adapt the at least one command on the basis of states of detection ({0, *D*}, {0, *P*}, {1, *D*}, {1, *P*}) defined on the basis of the zones of the gesture sensor (7) and of the proximity sensor (9),
- and in that it further comprises a pressure sensor (3), **characterized in that** the interface module is configured so that, when the proximity sensor (9) detects the execution of a gesture in the proximal position zone (*zpp*) and the gesture sensor (7) detects the execution of a gesture in the proximal position ({1, *P*}), the control unit (11) introduces a latency time between the detection of a gesture by the gesture sensor (7) and the execution of the associated command, and **in that**, when pressure is detected by the pressure sensor (3), the commands that are associated with detected gestures but have not yet been executed are canceled or are not recognized.

2. Interface module according to Claim 1, **characterized in that**, when the proximity sensor (9) is in a no-detection state, and the gesture sensor (7) detects the execution of a gesture in the distal position ({0, *D*}), the control unit (11) is further configured to operate in a degraded state in which only some of the properties of the gesture are analyzed.

3. Interface module according to Claim 1, **characterized in that**, when the proximity sensor (9) does not detect any gesture executed in the proximal position zone (*zpp*), the control unit (11) is further configured to operate in a degraded state in which only some of the properties of the gesture are analyzed.

4. Interface module according to any of the preceding claims, further comprising a pressure sensor (3), **characterized in that**, when the proximity sensor (9) detects the execution of a gesture in the proximal position zone (*zpp*) and the gesture sensor (7) detects the execution of a gesture in the proximal position ({1, *P*}), the control unit (11) is configured to ignore the gestures detected by the gesture sensor (9), which are then considered to be approach movements for the purpose of exerting pressure on the pressure sensor (3).

5. Interface module according to at least one of the preceding claims, **characterized in that** it is configured in such a way that, starting from a standby state of the proximity sensor (9), when the gesture sensor (7) detects the execution of a gesture in the proximal position ({0, *P*}), a procedure for waking up the proximity sensor (9) is initiated.

6. Interface module according to any of the preceding claims, **characterized in that** the control unit (11) is further configured to isolate the speed of approach or withdrawal of a command element (M) used to execute the gesture, and to modify the position of the gesture boundary (F2) on the basis of said speed of approach or withdrawal.

7. Interface module according to at least one of Claims 1 to 3, further comprising a pressure sensor (3), **characterized in that** it is configured in such a way that, starting from a standby state of the pressure sensor (3), when the proximity sensor (9) detects the execution of a gesture in the proximal position zone (*zpp*), a procedure for waking up the pressure sensor (3) is initiated.

8. Interface module according to at least one of Claims 1 to 3, further comprising a pressure detector (3), **characterized in that** the interface module (1) is configured so that, when the pressure detector (3) detects a pressure, the control unit (11) is configured to ignore the gestures detected while the proximity sensor (9) detects the execution of a gesture in the proximal position (*zpp*) and the gesture sensor (7) detects the execution of a gesture in the proximal position ({1, *P*}).

9. Interface module according to at least one of the preceding claims, **characterized in that** the gesture sensor (7) and the proximity sensor (9) comprise, respectively, a plurality of optical emitters (17, 17a) emitting optical beams (23) guided toward the detection space (E) and a plurality of optical sensors (19, 19a) configured to capture the light re-emitted by an element making the gesture, said optical emitters (17, 17a) and optical sensors (19, 19a) being arranged on a common support (21) of the same sensor module (15) .

10. Interface module according to any of the preceding claims, **characterized in that** it further comprises a plurality of sensor modules (15), each comprising at least one gesture sensor (7) and at least one proximity sensor (9), said sensor modules (15) being oriented according to different axes (A, B).

11. Interface module according to Claim 10, intended to be integrated into a motor vehicle passenger compartment, **characterized in that** it comprises two sensor modules (15), and **in that** one of the axes (A) is oriented toward a driver of the vehicle, while the second axis (B) is oriented toward a passenger in the vehicle.

12. Interface module according to any of the preceding claims, **characterized in that** it further comprises environmental sensors (13) and **in that** the control unit (11) is configured to adjust the position of at least one of the gesture or proximity boundaries (F1, F2, F2', F3) on the basis of a signal emitted by the environmental sensors (13).
